# EUROPÄISCHE PATENTANMELDUNG

(11) **EP 1 627 845 A1**
(43) Veröffentlichungstag der Anmeldung: **22.02.2006**
(21) Anmeldenummer: 05017918.3
(22) Anmeldetag: 17.08.2005
(51) Int. Cl.: B66F 9/075, B60N 3/00

(54) **Flurförderzeug mit verstellbarem Blatthalterungsvorrichtung**

(30) Priorität: 18.08.2004 DE 102004040063
(71) Anmelder: Jungheinrich Aktiengesellschaft, 22047 Hamburg (DE)
(72) Erfinder: Schönauer, Michael, Dipl.-Ing., 85368 Mosburg (DE)
(74) Vertreter: Tiesmeyer, Johannes

(57) **Zusammenfassung**

Die Erfindung stellt ein Flurförderzeug (10), insbesondere eine Kommissionierstapler, bereit, welches mit einer Blatthalterungsvorrichtung (30) versehen ist, die im Bereich eines Fahrerstands (20) des Flurförderzeugs (10) an eine Stützstruktur (21) montiert ist. Eine Schreibfläche (32) der Blatthalterungsvorrichtung (30) ist zwischen einer Verstauungsstellung und einer Benutzungsstellung entlang eines Verstellwegs verstellbar und ist in wenigstens der Benutzungsstellung feststellbar. Weiterhin ist ein Kraftgerät (42) vorgesehen, welches bei einer Verstellung der Blatthalterungsvorrichtung (30) zumindest längs eines Abschnitts des Verstellwegs (V) in wenigstens einer Verstellrichtung, vorteilhafterweise in beiden Verstellrichtungen, auf die Blatthalterungsvorrichtung (30) eine Kraft (F) ausübt, welche eine in die Verstellrichtung wirkende Kraftkomponente (Fᵥ, F_{v'}) besitzt.

## Beschreibung

Die Erfindung betrifft ein Flurförderzeug, insbesondere einen Kommissionierstapler oder ein Kommissioniergerät, mit einer an eine Stützstruktur des Flurförderzeugs montierten Blatthalterungsvorrichtung, welche zwischen einer Verstauungsstellung und einer Benutzungsstellung entlang eines Verstellwegs verstellbar und in wenigstens der Benutzungsstellung feststellbar ist.

Es ist bekannt, bei Flurförderzeugen im Fahrerstand eine Blatthalterungsvorrichtung vorzusehen, an der beispielsweise eine Liste von zu fördernden Waren gehalten werden kann, so dass der Fahrer des Flurförderzeugs während des Betriebs seinen Arbeitsfortschritt kontrollieren und ggf. notieren kann, welche Waren bereits an ihrem Bestimmungsort angekommen sind und welche noch zusammengestellt werden müssen.

Diese auch als Orderbretter bezeichneten bekannten Blatthalterungsvorrichtungen können senkrecht oder waagrecht fest im Bereich des Fahrerstands montiert sein. Dies hat den Nachteil, dass waagrecht montierte Blatthalterungsvorrichtungen zwar bei passender Montagehöhe eine komfortable Schreiboberfläche bereitstellen, allerdings in das Volumen des Fahrerstands hineinragen und somit den Fahrer bei seiner Arbeit behindern können und ggf. sogar ein Verletzungsrisiko darstellen. Senkrecht montierte Orderbretter vermeiden das Verletzungsrisiko und die unerwünschte Verkleinerung des Fahrerstands-Volumens, bieten allerdings keine komfortabel benutzbare Schreiboberfläche für den Fahrer und Stifte mit Tintenfluss, wie beispielsweise Kugelschreiber, können beim Schreiben auf einer senkrechten Oberfläche versagen.

Es sind weiterhin Blatthalterungsvorrichtungen der eingangs genannten Art bekannt, welche zwischen einer in der Regel senkrechten Verstauungsstellung und einer Benutzungsstellung verstellbar und in jeder dieser Stellungen mit einer Flügelmutter feststellbar sind. Dies hat den Vorteil, dass die Blatthalterungsvorrichtung in der Verstauungsstellung so untergebracht werden kann, dass sie im Fahrerstand möglichst wenig Volumen beansprucht, dem Fahrer also nicht im Weg ist und kein Verletzungsrisiko darstellt, und in der Benutzungsstellung eine komfortable Schreibposition bereitstellen kann. Die Verstellung dieser Blatthalterungsvorrichtungen ist allerdings für den Benutzer aufwendig und kann nicht einhändig erfolgen.

Es ist daher eine Aufgabe der vorliegenden Erfindung, eine derartige Blatthalterungsvorrichtung für ein Flurförderzeug bereitzustellen, welche von einem Benutzer mit geringem Aufwand, insbesondere einhändig, verstellt werden kann.

Diese Aufgabe wird durch ein gattungsgemäßes Flurförderzeug gelöst, bei welchem ein Kraftgerät vorgesehen ist, welches bei einer Verstellung der Blatthalterungsvorrichtung zumindest längs eines Abschnitts des Verstellwegs in wenigstens einer Verstellrichtung, vorteilhafterweise in beiden Verstellrichtungen, auf die Blatthalterungsvorrichtung eine Kraft ausübt, welche eine in die Verstellrichtung wirkende Kraftkomponente besitzt.

Durch das erfindungsgemäß vorgesehene Kraftgerät wird sichergestellt, dass in wenigstens einer Verstellrichtung zumindest längs eines Abschnitt des Verstellwegs die Verstellbewegung unterstützt oder, je nach Leistungsfähigkeit des Kraftgeräts, bewirkt wird, und es somit dem Fahrer des Flurförderzeugs erleichtert wird, die Blatthalterungsvorrichtung zu verstellen.

Da eine Bedienperson des Flurförderzeugs die Blatthalterungsvorrichtung in der Benutzungsstellung unter Umständen kurzfristig benötigt, um dringende Notizen festzuhalten, ist die wenigstens eine vom Kraftgerät unterstützte Verstellrichtung vorzugsweise die Verstellrichtung von der Verstauungsstellung in die Benutzungsstellung. Eine Rückstellung der Blatthalterungsvorrichtung in die Verstauungsstellung kann nach Ausführung der Notizen ohne Zeitdruck geschehen.

Für eine hohe Effektivität ist es jedoch vorteilhaft, wenn die Bedienperson sich nicht unnötig lange mit der Verstauung der Blatthalterungsvorrichtung aufhält, so dass vorteilhafterweise daran gedacht ist, das Kraftgerät dazu auszubilden, eine Verstellung der Blatthalterungsvorrichtung in die eine wie in die andere Verstellrichtung zu unterstützen.

Vorteilhaft ist dabei weiter, wenn das Kraftgerät derart ausgebildet ist, dass die eine Verstellung der Blatthalterungsvorrichtung unterstützende oder sogar bewirkende Kraftkomponente in einem eine Endposition der Blatthalterungsvorrichtung umfassenden Endabschnitt des Verstellwegs auf die Blatthalterungsvorrichtung wirkt. Aus den oben genannten Gründen ist eine bevorzugte Endstellung die Benutzungsstellung. Besonders vorteilhaft ist es jedoch, wenn das Kraftgerät sowohl in der Benutzungsstellung als auch in der Verstauungsstellung als Endstellungen eine entsprechende Kraft auf die Blatthalterungsvorrichtung ausübt. In diesen Fällen wirkt daher eine während der Verstellung der Blatthalterungsvorrichtung vom Kraftgerät auf diese ausgeübte Kraft mit einer zur Endstellung hin wirkenden Kraftkomponente nach, so dass das Kraftgerät die Blatthalterungsvorrichtung in die jeweilige Endstellung vorspannt. Dadurch kann, bei geeigneter Wahl oder/und Anordnung des Kraftgeräts, die oben bezeichnete Feststellung der Blatthalterungsvorrichtung in der jeweiligen Endstellung, vorzugsweise in der Benutzungsstellung, ohne weitere Arretierungsmittel erreicht werden.

Die Kraft kann hierbei derart abgestimmt sein, dass das Kraftgerät ohne die Notwendigkeit einer separaten Feststellvorrichtung die Blatthalterungsvorrichtung jeweils so in der gewünschten Endstellung feststellt, dass sie durch geringe Kräfte, wie sie in der Benutzungsstellung beispielsweise beim Schreiben auf der Blatthalterungsvorrichtung auftreten, nicht wesentlich aus der gewünschten Endstellung gedrückt wird. Ein eventuelles leichtes Nachgeben oder Federn der Blatthalterungsvorrichtung in der Benutzungsstellung beim Schreiben wird hierbei in Kauf genommen. Als Kraftgerät können beispielsweise elektrische, elektromagnetische, hydraulische, pneumatische oder mechanische Kraftgeräte vorgesehen sein.

Da die Blatthalterungsvorrichtung gemäß der obigen vorteilhaften Weiterbildung der Erfindung durch die durch das Kraftgerät ausgeübte Kraftkomponente wenigstens in der Benutzungsstellung festgestellt sein kann, ist eine einhändige Betätigung der Blatthalterungsvorrichtung zur Verstellung in die Benutzungsstellung möglich, da eine manuelle Verstellung nur solange erfolgen braucht, bis sich die Blatthalterungsvorrichtung in dem Kraftunterstützungsabschnitt des Verstellwegs befindet. Ab dann kann nämlich die weitere Verstellung bei ausreichend dimensioniertem Kraftgerät selbsttätig erfolgen. Zur Verstellung aus der jeweiligen vom Kraftgerät festgestellten Endstellung braucht dann nur die einer Verstellbewegung entgegenwirkende Kraftkomponente des Kraftgeräts überwunden zu werden. Zusätzliche Handgriffe zum Feststellen/Lösen der Blatthalterungsvorrichtung sind nicht erforderlich.

Bei der Stützstruktur, an die die Blatthalterungsvorrichtung montiert ist, kann es sich um eine Trägerstruktur des Fahrerstands, eine Rückwand des Fahrerstands, oder um eine beliebige andere Struktur des Flurförderzeugs handeln, welche dazu geeignet ist, eine Blatthalterungsvorrichtung aufzunehmen. Der Begriff "Fahrerstand" umfasst hierbei sowohl einen rahmenfesten Fahrerstand, als auch einen Fahrerplatzträger, welcher sich mit dem Lastmittel mitbewegt.

Vorteilhafterweise umfasst das Kraftgerät ein Federelement. Dieses kann etwa eine Schraubendruckfeder sein. Bevorzugt umfasst das Federelement eine Gasdruckfeder, welche bei geringem Bauraumbedarf einen sehr großen Federweg bereitstellt. Damit kann ein einfaches, kostengünstiges und robustes Kraftgerät bereitgestellt werden.

Eine vorteilhafte Krafteinwirkung des Kraftgeräts auf die Blatthalterungsvorrichtung, so dass diese sowohl in der Benutzungsstellung als auch in der Verstauungsstellung durch das Federelement feststellbar ist, kann in konstruktiv einfacher Weise dadurch realisiert sein, dass das Federelement sowohl an der Stützstruktur als auch an der Blatthalterungsvorrichtung zur Drehung um im Wesentlichen parallele Drehachsen angelenkt ist, wobei das Federelement während der Verstellbewegung der Blatthalterungsvorrichtung zwischen der Verstauungsstellung und der Benutzungsstellung eine eine Federelement-Totpunktstellung durchlaufende Drehbewegung um seinen Stützstruktur-Anlenkpunkt ausführt. Die Totpunktstellung ist hierbei definiert durch eine Stellung, bei der das Federelement maximal komprimiert ist, bei der keine Komponente der Federkraft in Verstellrichtung wirkt, und bei der sich die Wirkungsrichtung der verstellwegsparallel wirkenden und stets vom Totpunkt weg weisenden Kraftkomponente umkehrt. Bei der Drehbewegung um den Stützstruktur-Anlenkpunkt wird das Federelement also zuerst komprimiert, um am Totpunkt seine maximale Komprimierung zu erreichen, und kann sich dann wieder ausdehnen, um auf dem Abschnitt des Verstellwegs, der in der jeweiligen Verstellrichtung hinter dem Totpunkt liegt, die weitere Verstellbewegung zu unterstützen. Ein Benutzer der Blatthalterungsvorrichtung wird also im ersten Abschnitt des Verstellwegs bis zum Totpunkt eine Kraft gegen eine Federkraft des Federelements ausüben müssen, bis dann nach Überwindung des Totpunkts eine Kraftkomponente des Federelements in die Verstellrichtung wirkt, so dass die Blatthalterungsvorrichtung entweder selbsttätig in die gewünschte Position gedrückt wird oder zumindest die Verstellkraft, die vom Benutzer aufgewendet werden muss, nur noch sehr gering ist.

Da es in der Benutzungsstellung möglich sein sollte, auf der Blatthalterungsvorrichtung zu schreiben, ohne dass sich die Blatthalterungsvorrichtung wesentlich aus ihrer Lage entfernt, ist der Über-Totpunkt-Mechanismus vorzugsweise so ausgestaltet, dass eine Haltekraft zum Feststellen der Blatthalterungsvorrichtung in der Benutzungsstellung größer ist als üblicherweise beim Schreiben auf eine Schreiboberfläche der Blatthalterungsvorrichtung wirkende Kräfte. Dies kann durch eine abgestimmte Vorspannung des Federelements und durch eine geeignete Wahl der Längen der Verstellweg-Abschnitte zwischen Benutzungsstellung und Totpunkt einerseits und zwischen Verstauungsstellung und Totpunkt andererseits erreicht werden. Um eine Verstellung der Blatthalterungsvorrichtung von der Verstauungsstellung in die Benutzungsstellung zu erleichtern, kann eine in der Verstauungsstellung wirkende Haltekraft geringer sein als eine in der Benutzungsstellung wirkende Haltekraft.

Es kann ferner vorgesehen sein, dass die Bewegung der Blatthalterurigsvorrichtung zwischen der Verstauungsstellung und -der Benutzungsstellung eine Schwenkbewegung umfasst, oder vorzugsweise eine Schwenkbewegung ist.

Es kann im Rahmen der Erfindung weiterhin vorgesehen sein, dass die Verstauungsstellung eine der Stützstruktur des Flurförderzeugs nähere Stellung der Blatthalterungsvorrichtung ist und dass die Benutzungsstellung eine der Stützstruktur des Flurförderzeugs fernere Stellung der Blatthalterungsvorrichtung ist. Dies hat den Vorteil, dass in der Verstauungsstellung die Blatthalterungsvorrichtung möglichst wenig in ein Volumen eines Fahrerstands hineinragt und somit den Fahrer nicht behindert und kein Verletzungsrisiko darstellt. Es kann weiterhin vorgesehen sein, dass an der Stützstruktur eine Mulde vorgesehen ist, die die Blatthalterungsvorrichtung in der Verstauungsstellung teilweise oder vollständig aufnimmt, so dass zur zusätzlichen Vermeidung von Verletzungsrisiken keine vorstehenden Kanten der Blatthalterungsvorrichtung in den Fahrerstand ragen.

Bei einer Anbringung der Blatthalterungsvorrichtung in einem Bereich zwischen knapp über Hüfthöhe und etwa Augenhöhe einer Bedienperson des Flurförderzeugs, liegt der je nach Anbringungshöhe ergonomisch günstigste Neigungswinkel gegenüber einer Aufstandsfläche des Flurförderzeugs für die Benutzungsstellung der Blatthalterungsvorrichtung zwischen 30 und 60°. In diesem Winkelbereich ist gleichzeitig sichergestellt, dass Stifte mit Tintenfluss, wie beispielsweise Kugelschreiber, zum Schreiben auf der Schreiboberfläche der Blatthalterungsvorrichtung eingesetzt werden können. Wenn die Blatthalterungsvorrichtung zweckmäßigerweise etwa auf oder knapp unter Schulterhöhe eines Fahrers angebracht wird, ist ein Neigungswinkel der Schreiboberfläche in der Benutzungsstellung 40 bis 50°, und insbesondere von etwa 45°, ergonomisch am günstigsten.

Die Blatthalterungsvorrichtung kann wenigstens einen Griff umfassen, der vorzugsweise als wannenartige Griffmulde ausgeführt sein kann. Mittels des Griffs ist die Blatthalterungsvorrichtung einfach, insbesondere auch einhändig, zwischen der Benutzungsstellung und der Verstauungsstellung verstellbar, wobei eine wannenartige Griffmulde noch zusätzlich als Ablage, beispielsweise zum Aufnehmen von Kleinteilen geeignet ist.

Die Blatthalterungsvorrichtung kann weiterhin wenigstens eine Ausnehmung umfassen, etwa zur Aufnahme von Schreibgeräten. Außerdem kann wenigstens eine Klemmvorrichtung zum Halten von Blättern vorgesehen sein.

Ferner betrifft die Erfindung allgemein eine Schreibunterlage, welche eine Haltestruktur zur Befestigung auf einem Untergrund sowie eine Blatthalterungsvorrichtung umfasst, welche relativ zu der Haltestruktur zwischen einer Verstauungsstellung und einer Benutzungsstellung entlang eines Verstellwegs verstellbar und in wenigstens der Benutzungsstellung feststellbar ist, wobei ein Kraftgerät zwischen Haltestruktur und Blatthalterungsvorrichtung vorgesehen ist, welches bei einer Verstellung der Blatthalterungsvorrichtung zumindest längs eines Abschnitts des Verstellwegs in wenigstens einer, vorteilhafterweise in beiden Verstellrichtungen auf die Blatthalterungsvorrichtung eine Kraft ausübt, welche eine in die Verstellrichtung wirkende Kraftkomponente besitzt.

Hierbei kann die Haltestruktur der Blatthalterungsvorrichtung beispielsweise eine Montageplatte umfassen, mittels derer die Blatthalterungsvorrichtung an einer beliebigen festen Oberfläche oder Struktur montiert werden kann und die Blatthalterungsvorrichtung kann weiterhin mit einem der oben genannten Merkmale ausgeführt sein.

Im Folgenden wird eine Ausführungsform der vorliegenden Erfindung anhand der beigefügten Zeichnungen beispielhaft erläutert. Es zeigt:
Fig. 1 eine perspektivische Ansicht eines erfindurigsgemäßen Flurförderzeugs mit einer Blatthalterungsvorrichtung;
Fig. 2 eine perspektivische Ansicht der Blatthalterungsvorrichtung aus Fig. 1; und
Fig. 3a-c eine schematische Darstellung einer Verstellbewegung der Blatthalterungsvorrichtung von Fig. 1 und 2.

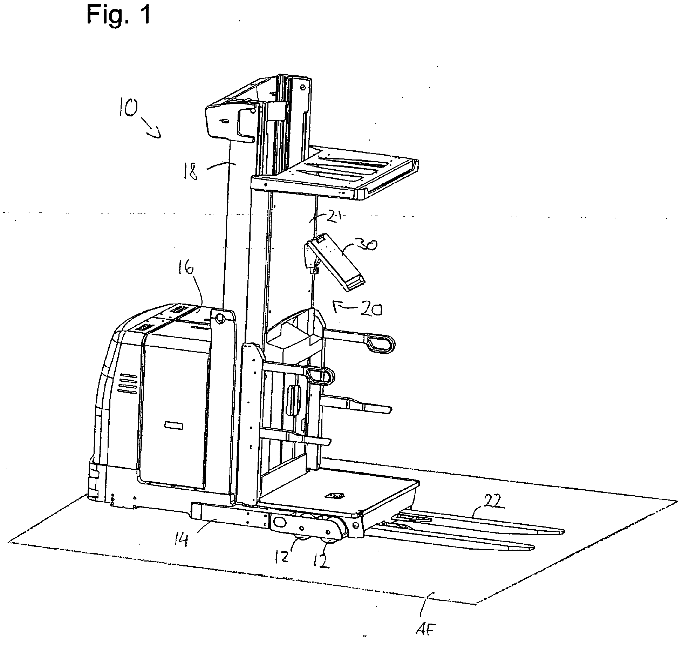

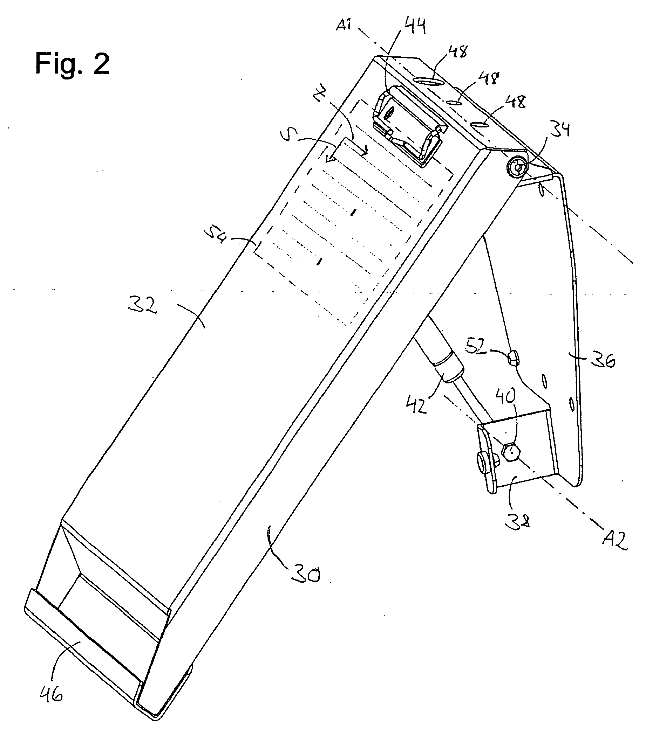

Bei dem in Fig. 1 gezeigten Flurförderzeug handelt es sich um ein so genanntes Kommissioniergerät 10 mit einem auf Laufrädern 12 abgestützten Fahrgestell 14, welches auf einer im Wesentlichen ebenen Aufstandsfläche AF steht. Ein nicht gezeigtes hinteres Laufrad ist lenkbar. Unter der Haube 16 im hinteren Bereich des Kommissioniergeräts 10 sind ein elektromotorischer Fahrantrieb, Akkumulatoren zur elektrischen Versorgung und hydraulische Komponenten für den Antrieb eines an einem Hubgerüst 18 gesteuert vertikal verfahrbaren Fahrerstands 20 vorgesehen. Am Fahrerstand 20 ist ein Lastmittel 22 angebracht, das gemeinsam mit dem Fahrerstand hydraulisch höhenverstellbar ist. Im Bereich des Fahrerstands 20 ist an einer Stützstruktur 21, wie beispielsweise einem Träger oder einer Rückwand des Fahrerstands, eine Blatthalterungsvorrichtung 30 vorgesehen, die im Folgenden mit Bezug auf Fig. 2 näher erläutert wird.

Fig. 2 zeigt die Blatthalterungsvorrichtung 30 in ihrer Benutzungsstellung. Die Blatthalterungsvorrichtung 30 ist mittels Bolzen 34 um eine Schwenkachse A1 schwenkbar an einer Montageplatte 36 befestigt und umfasst eine Schreiboberfläche 32 auf der, wie durch einen gestrichelten Umriss angedeutet, ein beschriebenes Blatt 54 angeordnet ist. Die Schwenkachse A1 der Blatthalterungsvorrichtung 30 kann hierbei grundsätzlich entweder parallel zu einer Zeilenrichtung Z des auf der Schreiboberfläche 32 angeordneten beschriebenen Blatts 54 ausgerichtet sein, oder senkrecht dazu entlang einer Spaltenrichtung S. Eine, wie in Fig. 2 dargestellt, zu einer Zeilenrichtung Z parallele Schwenkachse A1 weist den Vorteil auf, dass unabhängig vom Verstellwinkel der Blatthalterungsvorrichtung 30- die Schreiboberfläche 32 immer in-Zeilenrichtung Z parallel zu der Aufstandsfläche AF des Flurförderzeugs 10 ausgerichtet ist, so dass es bei jedem Verstellwinkel möglich ist, in einer zur Aufstandsfläche AF parallelen Zeilenrichtung Z zu schreiben. Im Gegensatz dazu wäre bei einer parallel zur Spaltenrichtung S angeordneten Schwenkachse A1 nur bei einem einzigen Verstellwinkel sichergestellt, dass die Zeilenrichtung Z der Schreiboberfläche 32 parallel zu der Aufstandsfläche des Flurförderzeugs 10 ausgerichtet ist, d.h., ein komfortables Schreiben wäre nur bei einem einzigen Verstellwinkel möglich. Sollte sich also, beispielsweise durch Verschleiß des Federelements 42, der Verstellwinkel der Blatthalterungsvorrichtung 30 in der Benutzungsstellung ändern, ist bei der bevorzugten Anordnung der Schwenkachse A1 parallel zur Zeilenrichtung Z auf jeden Fall sichergestellt, dass trotz eines geänderten Neigungswinkels der Blatthalterungsvorrichtung 30 in der Benutzungsstellung ein komfortables Schreiben möglich ist.

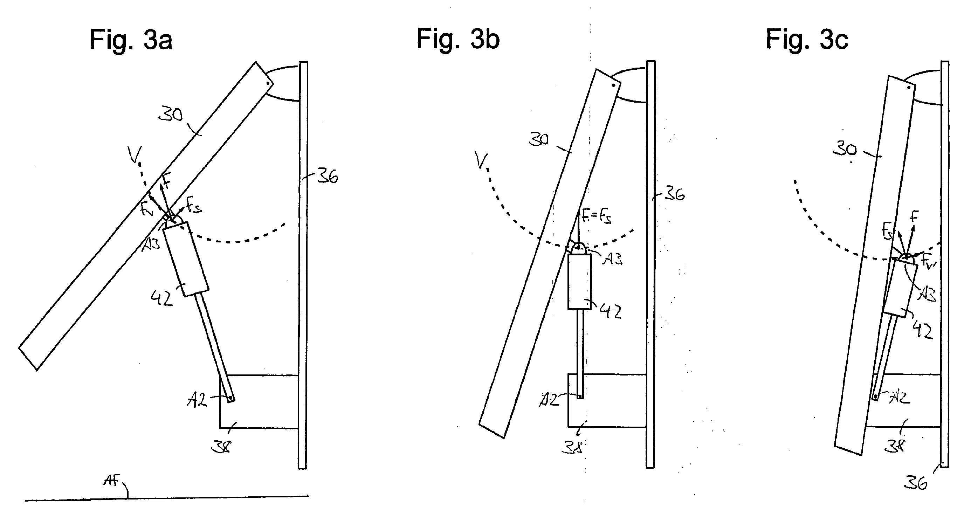

Die Montageplatte 36 umfasst einen vorstehenden Abschnitt 38, an welchem mittels eines Bolzens 40 ein Ende einer Gasdruckfeder 42 um eine Achse A2 schwenkbar angebracht ist. Das andere Ende der Gasdruckfeder 42 ist mittels einer nicht näher gezeigten Schamieranordnung um eine Achse A3 (siehe Fig. 3a-c) schwenkbar an der Blatthalterungsvorrichtung 30 befestigt. Die Schwenkachsen A2 und A3 sind hierbei zueinander parallel.

An der Blatthalterungsvorrichtung 30 sind ferner eine Blattklemme 44, eine wannenartige Griffmulde 46 und Ausnehmungen 48 vorgesehen. Die Griffmulde 46 dient hierbei gleichzeitig als Griff und als Ablagewanne für Kleinteile. Die Ausnehmungen 48, welche alternativ auch in der Montageplatte 36 ausgebildet sein können, können zur Aufnahme von Schreibgeräten dienen.

Die Montageplatte 36 weist Montagelöcher 50 auf, um mittels Bolzen 52 an einer Stützstruktur beispielsweise des Flurförderzeugs 10 befestigt zu werden.

Wie aus Fig. 2 ersichtlich, wird die Blatthalterungsvorrichtung 30 durch die einer Verstellung in Richtung der Montageplatte 36 entgegenwirkende Kraft der Gasdruckfeder 42 in der Benutzungsstellung gehalten. Hierbei ist die maximale Auslenkung der Gasdruckfeder 42 durch einen Stopper oder ähnliches am Gasdruckfederkolben begrenzt, so dass die Blatthalterungsvorrichtung 30 durch die Gasdruckfeder 42 nicht über die dargestellte Benutzungsstellung hinaus nach oben geschwenkt werden kann. Die Feststellkraft der Gasdruckfeder 42 ist hierbei so gewählt, dass sich die Blatthalterungsvorrichtung 30 nur unwesentlich aus der Benutzungsstellung nach unten drücken lässt, wenn ein Benutzer auf der Schreitioberfläche 32 einen für das Schreiben typischen leichten Druck ausübt. Andererseits ist allerdings die Feststellkraft der Gasdruckfeder 42 klein genug gewählt, damit ein Benutzer durch einhändigen Druck auf den Griff 46 diese Feststellkraft überwinden und die Blatthalterungsvorrichtung 30 in die Verstauungsstellung bewegen kann, bei der die Schreiboberfläche 32 im Wesentlichen parallel zur Montageplatte 36 ausgerichtet ist. Hierbei ist die Anordnung der Griffmulde 46 an der der Schwenkachse A1 der Blatthalterungsvorrichtung 30 fernen Seite vorteilhaft, da hiermit durch eine große Hebelübersetzung des langen Hebelarms der Griffmulde 46 gegenüber dem kürzeren Hebelarm der Gasdruckfeder 42 die zur Verstellung der Blatthalterungsvorrichtung 30 erforderlichen Kräfte verringert werden können.

Die Montageplatte 36 und der davon vorstehende Feder-Befestigungsabschnitt 38 können aus einem Metallblech einstückig, etwa durch Stanzen und Biegen, gefertigt werden. Die Blatthalterungsvorrichtung 30 kann einstückig aus einem gebogenen Metallblech gebildet werden, einschließlich der Bodenwand der Griffmulde 46. Alternativ kann die Blatthalterungsvorrichtung 30 zusammen mit der Griffmulde 46 ein- oder mehrteilig aus Kunststoff hergestellt werden.

Fig. 3a bis c erläutern den Über-Totpunkt-Mechanismus der Blatthälterungsvorrichtung 30. Fig. 3a zeigt hierbei die-Blatthalterungsvorrichtung 30 in der Benutzungsstellung, bei der die Schreiboberfläche 32 um etwa 45° gegenüber der Aufstandsfläche AF des Flurförderzeugs 10 geneigt ist. Die Aufstandsfläche AF des Flurförderzeugs 10 ist hierbei eine geeignete Bezugsebene, da es für eine komfortable Schreibposition wichtig ist, dass die Schreiboberfläche 32 in einem ergonomisch günstigen Winkel relativ zur Bodenfläche des Fahrerstands 20 geneigt ist und die Bodenfläche des Fahrerstands 20 in der Regel parallel zur Aufstandsfläche AF des Flurförderzeugs 10 ausgerichtet ist.

Ein Verstellweg V, den das an der Blatthalterungsvorrichtung 30 angelenkte obere Ende der Gasdruckfeder 42 durchläuft, ist durch eine gestrichelte Linie angedeutet. Die von der Gasdruckfeder 42 ausgeübte Kraft F lässt sich in eine Komponente Fv entlang einer Tangente an den Verstellweg V und in eine Komponente Fs senkrecht zur Tangente an den Verstellweg V zerlegen. Hierdurch wird ersichtlich, dass die Gasdruckfeder 42 die Blatthalterungsvorrichtung 30 in der Benutzungsstellung feststellt, so dass sich die Schreiboberfläche 32 auch bei Aufbringen eines geringen Drucks, wie beispielsweise beim Schreiben, nur unwesentlich aus der Benutzungsstellung entfernt und bei jeglicher leichter Verschiebung aus der Benutzungsstellung wieder in diese zurückfedert. Um die Blatthalterungsvorrichtung 30 aus der Benutzungsstellung in die Verstauungsstellung zu verstellen, muss an der Griffmulde 46 eine Kraft aufgebracht werden, welche die Komponente Fv der von der Gasdruckfeder 42 erzeugten Kraft F überwindet. Durch den großen Hebelarm der am von der Schwenkachse entfernten Ende der Blatthalterungsvorrichtung 30 angeordneten Griffmulde 46 ist diese Kraft im Verhältnis der Hebelarme kleiner als die von der Gasdruckfeder aufgewandte Haltekraft Fv.

Fig. 3b zeigt die Blatthalterungsvorrichtung 30 in einer Zwischenstellung zwischen der Benutzungs- und der Verstauungsstellung, bei der gerade der Totpunkt der Gasdruckfeder 42 erreicht ist. An diesem Totpunkt ist die Gasdruckfeder 42 maximal komprimiert, d. h. an diesem Punkt ist der Abstand zwischen dem- Verstellweg V und -dem- unteren Antenkpunkt der Gasdruckfeder 42 am Abschnitt 38 der Montageplatte 36 minimal. Die von der Gasdruckfeder 42 erzeugte Kraft F hat am Totpunkt keine in Richtung einer Tangente an den Verstellweg wirkende Kraftkomponente, so dass die Blatthalterungsvorrichtung 30 an diesem Punkt von der Gasdruckfeder 42 weder in Richtung der Benutzungsstellung, noch in Richtung der Verstauungsstellung gedrückt wird. Beim Verstellen der Blatthalterungsvorrichtung 30 aus der Benutzungsstellung in die Verstauungsstellung muss der Benutzer also nur entlang des Verstellwegabschnitts von der Benutzungsstellung bis zum Totpunkt die gegen die Verstellrichtung wirkende Kraftkomponente Fᵥ der Federkraft F überwinden.

In Fig. 3c ist die Verstauungsstellung der Blatthalterungsvorrichtung 30 gezeigt. In der Verstauungsstellung ist die Gasdruckfeder 42 über ihren Totpunkt hinaus weiter gegen den Uhrzeigersinn gedreht, so dass die Federkraft F nun wieder eine Kraftkomponente F_{v'} aufweist, welche entlang des Verstellwegs V in eine Richtung zur Montageplatte 36 hin wirkt und die Blatthalterungsvorrichtung 30 daher mit dieser Kraft F_{v'} in der Verstauungsstellung feststellt.

Durch geeignetes Abstimmen der Vorspannung der Gasdruckfeder 42 sowie der Länge und der Lage der Verstellwegabschnitte auf beiden Seiten des Totpunkts kann erreicht werden, dass die Haltekraft F_{v'}, die die Blatthalterungsvorrichtung 30 in der Verstauungsstellung feststellt, geringer ist als die Haltekraft Fv, die die Blatthalterungsvorrichtung 30 in der Benutzungsstellung feststellt. Dies hat den Vorteil, dass der Kraftaufwand zum Verstellen der Blatthalterungsvorrichtung 30 von der Verstauungsstellung in die Benutzungsstellung verringert wird, weil nur die geringere Kraft F_{v'} auf dem Verstellweg-Abschnitt von der Verstauungsstellung bis zum Totpunkt überwunden werden muss, während die Haltekraft Fᵥ in der Benutzungsstellung der Blatthalterungsvorrichtung 30 ausreicht, um die Schreiboberfläche 32 auch beim Aufbringen von geringem Druck, wie beispielsweise beim Schreiben, im Wesentlichen in der Benutzungsstellung zu fixieren. Eine in der Verstauungsstellung ausgeübte Haltekraft F_{v'} muss dagegen nur ausreichend groß sein, um die Blatthalterungsvorrichtung 30 gegen ungewollte selbsttätige Bewegung aus der Verstauungsstellung heraus festzustellen.

## Patentansprüche

1. Flurförderzeug (10), insbesondere Kommissionierstapler, mit einer an eine Stützstruktur (21) des Flurförderzeugs montierten Blatthalterungsvorrichtung (30), welche zwischen einer Verstauungsstellung und einer Benutzungsstellung entlang eines Verstellwegs (V) verstellbar und in wenigstens der Benutzungsstellung feststellbar ist,
**dadurch gekennzeichnet,**
**dass** ein Kraftgerät (42) vorgesehen ist, welches bei einer Verstellung der Blatthalterungsvorrichtung (30) zumindest längs eines Abschnitts des Verstellwegs (V) in wenigstens einer Verstellrichtung, vorteilhafterweise in beiden Verstellrichtungen, auf die Blatthalterungsvorrichtung (30) eine Kraft (F) ausübt, welche eine in die Verstellrichtung wirkende Kraftkomponente (Fᵥ, F_{v'}) besitzt.

2. Flurförderzeug (10) nach Anspruch 1, **dadurch gekennzeichnet, dass** das Kraftgerät ein Federelement (42) umfasst.

3. Flurförderzeug (10) nach Anspruch 2, **dadurch gekennzeichnet, dass** das Federelement eine Gasdruckfeder (42) umfasst.

4. Flurförderzeug (10) nach Anspruch 2 oder 3, **dadurch gekennzeichnet, dass** das Federelement (42) sowohl an der Stützstruktur (21) als auch an der Blatthalterungsvorrichtung (30) zur Drehung um im Wesentlichen parallele Drehachsen angelenkt ist, wobei das Federelement (42) während der Verstellbewegung der Blatthalterungsvorrichtung (30) zwischen der Verstauungsstellung und der Benutzungsstellung eine Federelement-Totpunktstellung durchlaufende Drehbewegung um seinen Stützstruktur-Anlenkpunkt ausführt.

5. Flurförderzeug (10) nach einem der vorhergehenden Ansprüche, **dadurch gekennzeichnet, dass** die Bewegung der Blatthalterungsvorrichtung (30) zwischen der Verstauungsstellung und der Benutzungsstellung eine Schwenkbewegung umfasst, vorzugsweise eine Schwenkbewegung ist.

6. Flurförderzeug (10) nach einem der vorhergehenden Ansprüche, **dadurch gekennzeichnet, dass** die Verstauungsstellung eine der Stützstruktur (21) des Flurförderzeugs (10) näheren Stellung der Blatthalterungsvorrichtung (30) ist und die Benutzungsstellung eine der Stützstruktur (21) des Flurförderzeugs (10) ferneren Stellung der Blatthalterungsvorrichtung (30) ist.

7. Flurförderzeug (10) nach einem der vorhergehenden Ansprüche, **dadurch gekennzeichnet, dass** die Blatthalterungsvorrichtung (30) in der Benutzungsstellung gegenüber einer Aufstandsfläche (AF) des Flurförderzeugs (10) um 30 bis 60°, vorzugsweise um 40 bis 50° und besonders bevorzugt um etwa 45° geneigt ist.

8. Flurförderzeug (10) nach einem der vorhergehenden Ansprüche, **dadurch gekennzeichnet, dass** die Blatthalterungsvorrichtung (30) wenigstens einen Griff (46) umfasst.

9. Flurförderzeug (10) nach Anspruch 8, **dadurch gekennzeichnet, dass** wenigstens einer der Griffe der Blatthalterungsvorrichtung (30) als wannenartige Griffmulde (46) ausgeführt ist.

10. Flurförderzeug (10) nach einem der vorhergehenden Ansprüche, **dadurch gekennzeichnet, dass** die Blatthalterungsvorrichtung (30) wenigstens eine Ausnehmung (48) umfasst, etwa zur Aufnahme von Schreibgeräten.

11. Flurförderzeug (10) nach einem der vorhergehenden Ansprüche,
**dadurch gekennzeichnet, dass** die Blatthalterungsvorrichtung (30) wenigstens eine Klemmvorrichtung (44), etwa zum Halten von Blättern, umfasst.

12. Schreibunterlage, welche eine Blatthalterungsvorrichtung (30) und eine Haltestruktur (36) umfasst, wobei die Blatthalterungsvorrichtung (30) relativ zur Haltestruktur (36) zwischen einer Verstauungsstellung und einer Benutzungsstellung entlang eines Verstellwegs (V) verstellbar und in wenigstens der Benutzungsstellung feststellbar ist,
**dadurch gekennzeichnet,**
**dass** ein Kraftgerät (42) vorgesehen ist, welches bei einer Verstellung der Blatthalterungsvorrichtung (30) zumindest längs eines Abschnitts des Verstellwegs (V) in wenigstens einer Verstellrichtung, vorteilhafterweise in beiden Verstellrichtungen, auf die-Blatthalterungsvorrichtung (30) eine Kraft (F) ausübt, welche eine in die Verstellrichtung wirkende Kraftkomponente (Fᵥ, F_{v'}) besitzt.

13. Schreibunterlage nach Anspruch 12 mit wenigstens einem Merkmal der Ansprüche 2 bis 11.
